# EUROPÄISCHE PATENTSCHRIFT

(11) **EP 2 720 911 B1**
(45) Veröffentlichungstag und Bekanntmachung des Hinweises auf die Patenterteilung: **20.05.2015**
(21) Anmeldenummer: 12712222.4
(22) Anmeldetag: 16.03.2012
(51) Int. Cl.: B60R 25/24, E05F 15/70

(54) **VERFAHREN FÜR DEN BETRIEB EINER KLAPPENANORDNUNG EINES KRAFTFAHRZEUGS**
METHOD FOR CONTROLLING A VEHICLE DOOR OR BONNET
MÉTHODE DE COMMANDE POUR UNE PORTE OU COFFRE D'UN VÉHICULE

(30) Priorität: 20.06.2011 DE 102011105460
(43) Veröffentlichungstag der Anmeldung: 23.04.2014
(73) Patentinhaber: Brose Fahrzeugteile GmbH & Co. KG, Hallstadt, 96103 Hallstadt (DE)
(72) Erfinder: EGGELING, Jürgen, 45475 Mühlheim an der Ruhr (DE); HELLMICH, Dirk, 47249 Duisburg (DE); DÜNNE, Klaus, 40882 Ratingen (DE)
(74) Vertreter: Gottschald, Jan
(86) Internationale Anmeldenummer: PCT/EP2012/001196
(87) Internationale Veröffentlichungsnummer: WO 2012/175150

(56) Entgegenhaltungen:
- WO-A1-2010/046008
- DE-A1- 10 341 691
- DE-A1-102008 032 732
- DE-A1-102008 032 733
- DE-U1-202005 020 085

## Beschreibung

Die vorliegende Erfindung betrifft ein Verfahren für den Betrieb einer Klappenanordnung eines Kraftfahrzeugs gemäß dem Oberbegriff von Anspruch 1 sowie eine Klappenanordnung eines Kraftfahrzeugs gemäß dem Oberbegriff von Anspruch 9.

Das in Rede stehende Verfahren betrifft die motorischen Verstellvorgänge, insbesondere den Öffnungsvorgang und den Schließvorgang, für einen Klappenflügel eines Kraftfahrzeugs. Der Begriff "Klappenflügel" ist dabei umfassend zu verstehen. Hierunter fallen Heckklappen, Heckdeckel, Motorhauben, Türen, insbesondere Seitentüren, Laderaumböden oder dgl. eines Kraftfahrzeugs.

Eine bekannte Klappenanordnung eines Kraftfahrzeugs (DE 20 2005 020 085 U 1) ist mit einem Klappenflügel, einem Kraftfahrzeugschloss und einer Steuerungsanordnung ausgestattet, wobei das Kraftfahrzeugschloss mit den üblichen Schließelementen, Schlossfalle und Sperrklinke ausgestattet ist. Die bekannte Klappenanordnung ist ferner mit einem motorischen Klappenantrieb ausgestattet, mit dem sich ein motorischer Öffnungsvorgang und ein motorischer Schließvorgang umsetzen lassen.

Bei dem benutzerseitigen Auslösen eines motorischen Verstellvorgangs ist es in der Regel so, dass mittels der Steuerungsanordnung ein vorbestimmtes Klappen-Bedienereignis erfasst und als steuerungstechnische Reaktion auf ein Klappen-Bedienereignis der Klappenantrieb angesteuert wird. Bei dem Klappen-Bedienereignis handelt es sich im einfachsten Fall um das benutzerseitige Betätigen eines Betätigungselements wie eines Tasters.

Bei dem bekannten Verfahren für den Betrieb einer Klappenanordnung ("BMW-Betriebsanleitung zum Fahrzeug, Limousine/Touring, 520i-530d", Seite 42, BMW AG, München, 2001, Bestell-Nr. 01400156203) wird davon ausgegangen, dass ein obiges Betätigungselement am Klappenflügel angeordnet ist. Im Einzelnen ist ein Betätigungselement außen an der Klappe, ein Betätigungselement innen an der Klappe und ein Betätigungselement im Fahrzeuginnenraum im Bereich des Fahrersitzes angeordnet. Damit ist die motorische Klappenverstellung durch insgesamt drei Bedienereignisse auslösbar, die der benutzerseitigen Betätigung des jeweiligen Betätigungselements entsprechen.

Die Betätigungselemente arbeiten bei dem bekannten Verfahren in einem sogenannten "Toggle-Betrieb". Dies bedeutet, dass bei in der Schließstellung oder der Öffnungsstellung befindlichem Klappenflügel zunächst eine Betätigung des Betätigungselements einen Öffnungs- oder Schließvorgang startet. Eine zweite Betätigung während des Verstellvorgangs löst dann das Stoppen des Verstellvorgangs aus. Eine dritte Betätigung des Betätigungselements führt schließlich dazu, dass der Verstellvorgang in umgekehrter Verstellrichtung fortgesetzt wird. Mit einer fortlaufenden Betätigung ist also eine fortlaufende Richtungsumkehr auslösbar, wobei jedes zweite Klappenbedienereignis, also jede zweite Betätigung, das Stoppen des Verstellvorgangs auslöst.

Ein derartiges Verfahren gemäß Oberbegriff des Anspruchs 1 ist aus der DE 102008032732 bekannt.

Mit dem bekannten Verfahren lässt sich die motorische Klappenverstellung mit wenigen Betätigungselementen und gleichzeitig auf benutzerfreundliche Weise bewerkstelligen. Ungewünschte Effekte ergeben sich dadurch, dass in manchen Fällen versehentlich zwei oder mehrere aufeinanderfolgende Klappen-Bedienereignisse auftreten. Dies kann beispielsweise der Fall sein, wenn ein Öffnungsfahrvorgang durch die Betätigung des außen an dem Klappenflügel angeordneten Betätigungselements ausgelöst wird. Dem Öffnungsvorgang geht meist ein geringfügiges Aufspringen des Klappenflügels voraus, was sich dadurch erklärt, dass das Kraftfahrzeugschloss öffnet und der Dichtungsgegendruck der Klappendichtung impulsartig auf den Klappenflügel wirkt. Dieses Aufspringen kann dazu führen, dass der Benutzer ungewünscht versehentlich weitere Betätigung vollzieht. Diese weitere Betätigung löst durch den oben angesprochenen Toggle-Betrieb ein ungewünschtes Stoppen des Verstellvorgangs aus, was vom Benutzer als Komforteinbuße wahrgenommen wird.

Der Erfindung liegt das Problem zugrunde, das bekannte Verfahren für den Betrieb einer Klappenanordnung derart auszugestalten und weiterzubilden, dass der Benutzungskomfort gesteigert wird.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, bei zwei aufeinanderfolgenden Klappen-Bedienereignissen mittels der Steuerungsanordnung die auf das zweite Klappen-Bedienereignis zurückgehende, steuerungstechnische Reaktion des Stoppens eines Verstellvorgangs zu unterdrücken, sofern mindestens eine vorbestimmte Unterdrückungsbedingung erfasst wird.

Bei geeigneter Auslegung lässt sich die oben genannte, ungewünschte Reaktion des Stoppens des Verstellvorgangs mit einfachen steuerungstechnischen Mitteln weitgehend vermeiden. Der Wegfall des ungewünschten Stoppens eines Verstellvorgangs führt zu einem erheblichen Komfortgewinn für den Benutzer.

Sofern mehrere Unterdrückungsbedingungen definiert sind, werden diese vorzugsweise als UND-Verknüpfung in der Steuerungsanordnung verknüpft. Dies bedeutet, dass alle Unterdrückungsbedingungen erfüllt sein müssen, um ein vorschlagsgemäßes Unterdrücken der betreffenden Reaktion zu bewirken (Anspruch 2). Für das Unterdrückensbedingungen sind zahlreiche Varianten denkbar.

Die besonders bevorzugte Ausgestaltung gemäß Anspruch 5 betrifft die im einleitenden Teil der Beschreibung angesprochene Problematik der mehrmaligen Betätigung ein und desselben Betätigungselements. Sofern das zweite Klappen-Bedienereignis auf eine Betätigung eines anderen Betätigungselements zurückgeht, beispielsweise weil vom Innenraum des Kraftfahrzeugs eine Einklemmgefahr erkannt worden ist, wird das Unterdrücken der betreffenden Reaktion nicht vorgenommen.

Bei den weiter bevorzugten Ausgestaltungen gemäß den Ansprüchen 6 und 7 wird das Unterdrücken der betreffenden Reaktion ausschließlich in einem vorbestimmten Zeitintervall oder in einem vorbestimmten Verstellbereich des Klappenflügels vorgenommen. Dies trägt der Tatsache Rechnung, dass die durch die vorschlagsgemäße Lösung zu vermeidende, ungewünschte Doppelbetätigung in erster Linie in einem begrenzten Bereich um die Schließstellung des Klappenflügels herum auftritt. Entsprechend ist es auch gemäß Anspruch 8 vorgesehen, dass dort das Unterdrücken der betreffenden Reaktion ausschließlich im Zuge des Öffnungsvorgangs vorgenommen wird.

Nach einer weiteren Lehre gemäß Anspruch 9, der ebenfalls eigenständige Bedeutung zukommt, wird eine Klappenanordnung beansprucht, die einen Klappenflügel, eine Steuerungsanordnung und einen Klappenantrieb aufweist. Wesentlich dabei ist die Tatsache, dass die Steuerungsanordnung ausgelegt, insbesondere programmiert, ist, um das vorschlagsgemäße Verfahren durchführen zu können. Auf die diesbezüglichen Ausführungen darf verwiesen werden.

Im Folgenden wir die Erfindung anhand einer lediglich ein Ausführungsbeispiel darstellenden Zeichnung gezeigt. In der Zeichnung zeigt die einzige Figur den Heckbereich eines Kraftfahrzeugs mit einer vorschlagsgemäßen Klappenanordnung zur Durchführung eines vorschlagsgemäßen Verfahrens.

Die in der Zeichnung dargestellte Klappenanordnung 1 ist in üblicher Weise mit einem Klappenflügel 2 und mit einer Steuerungsanordnung 3 ausgestattet. Alle Komponenten der Klappenanordnung 1 sind in der Zeichnung höchst schematisch dargestellt.

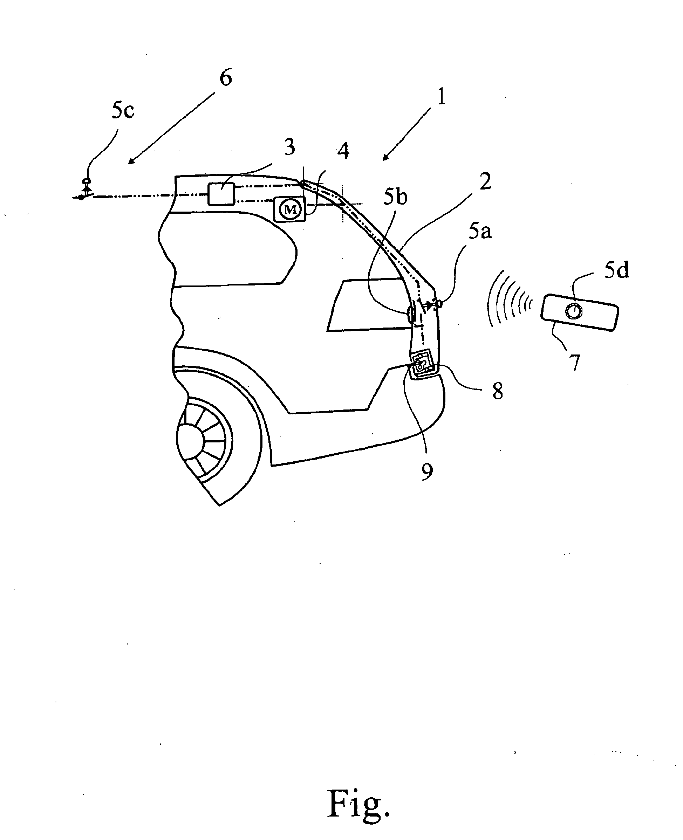

Die Steuerungsanordnung 3 kann mit einer übergeordneten Steuerung einerseits und mit den anzusteuernden Komponenten der Klappenanordnung 1 über ein Bussystem, insbesondere über ein CAN-Bussystem, gekoppelt sein. Die Steuerungsanordnung 3 kann, wie in Figur 1 gezeigt, eine in sich abgeschlossene Struktur aufweisen oder aber dezentral verteilt sein.

Bei dem Klappenflügel 2 handelt es sich hier und vorzugsweise um die Heckklappe eines Kraftfahrzeugs. Der Begriff "Klappenflügel" ist aber, wie oben angedeutet, weit auszulegen und umfasst u.a. Heckdeckel, Motorhauben, Türen, insbesondere Seitentüren, Laderaumböden oder dgl. eines Kraftfahrzeugs.

Dem Klappenflügel 2 ist ein Klappenantrieb 4 zugeordnet, durch den der Klappenflügel 2 in bekannter Weise zwischen der in der Zeichnung dargestellten Schließstellung und einer Öffnungsstellung in einem Verstellvorgang verstellbar ist.

Für das benutzerseitige Auslösen eines Verstellvorgangs ist es vorgesehen, dass die Steuerungsanordnung 3 dafür ausgelegt ist, mindestens ein vorbestimmtes Klappen-Bedienereignis zu erfassen. Bei dem Klappen-Bedienereignis kann es sich um irgendeine benutzerseitige Betätigung handeln, wie noch erläutert wird.

Wenn die Steuerungsanordnung 3 ein obiges, vorbestimmtes Klappen-Bedienereignis erfasst hat, steuert sie als steuerungstechnische Reaktion auf dieses Klappen-Bedienereignis den Klappenantrieb 4 entsprechend an.

Sofern ein Klappen-Bedienereignis aus einem Stillstand des Klappenflügels 2 heraus erfasst wird, gibt es zwei Möglichkeiten der Ansteuerung. Sofern sich der Klappenflügel 2 in einer der beiden Endstellungen befindet, wird ein neuer Verstellvorgang, nämlich ein Öffnungsvorgang oder ein Schließvorgang, gestartet. Sofern sich die Klappenanordnung 1 in einem mechanischen oder steuerungstechnischen Zwischenzustand befindet, in der ein angefangener Verstellvorgang zuvor gestoppt worden ist, wird die Steuerungsanordnung 3 den gestoppten Verstellvorgang fortsetzen. In besonders bevorzugter Ausgestaltung erfolgt die Fortsetzung des Verstellvorgangs dann in umgekehrter Verstellrichtung. Sofern ein Klappen-Bedienereignis aus einem laufenden Verstellvorgang heraus erfasst wird, stoppt die Steuerungsanordnung den Verstellvorgang. Bis hierhin entspricht das Verfahren für den Betrieb einer Klappenanordnung dem im einleitenden Teil der Beschreibung erläuterten "Toggle-Verfahren".

Wesentlich ist nun, dass bei zwei aufeinanderfolgenden Klappen-Bedienereignissen mittels der Steuerungsanordnung 3 die auf das zweite Klappen-Bedienereignis zurückgehende, steuerungstechnische Reaktion des Stoppens eines Verstellvorgangs unterdrückt wird, sofern mindestens eine Unterdrückungsbedingung erfaßt wird.

Grundsätzlich ist es denkbar, dass nach der vorschlagsgemäßen Unterdrückung einer steuerungstechnischen Reaktion der übliche Klappenbetrieb 4 fortgesetzt wird. Denkbar ist aber auch, dass das Unterdrücken für ein vorbestimmtes Zeitintervall beibehalten wird.

Es wurde im allgemeinen Teil der Beschreibung bereits angesprochen, dass vorzugsweise mehrere Unterdrückungsbedingungen definiert sind. In diesem Fall ist es weiter vorzugsweise so, dass für das Unterdrücken einer steuerungstechnischen Reaktion alle Unterdrückungsbedingungen nach Art einer UND-Verknüpfung erfüllt sein müssen. Es reicht also nicht aus, wenn nur eine der Unterdrückungsbedingungen erfüllt wird.

Vorzugsweise ist einem Klappen-Bedienereignis ein Betätigungselement 5 zugeordnet, dessen Betätigung dem jeweiligen Klappen-Bedienereignis entspricht. Bei dem Betätigungselement 5 handelt es sich vorzugsweise um einen elektrischen Taster oder dgl..

Es lässt sich der Zeichnung entnehmen, dass mindestens ein einem Klappen-Bedienereignis zugeordnetes Betätigungselement 5a,b an dem Klappenflügel 2 angeordnet ist. Hier und vorzugsweise ist ein Betätigungselement 5a außen an dem Klappenflügel 2 und ein Betätigungselement 5b innen an dem Klappenflügel 2 angeordnet. In der Zeichnung ist ein weiteres, einem Klappen-Bedienereignis zugeordnetes Betätigungselement 5c angedeutet, das im Fahrzeuginnenraum 6 angeordnet ist. Ein viertes, einem Klappen-Bedienereignis zugeordnetes Betätigungselement 5d ist schließlich an einem Funkschlüssel 7 angeordnet. Es sind also insgesamt vier Betätigungselemente 5 vorgesehen, denen jeweils ein in Rede stehendes Klappen-Bedienereignis zugeordnet ist. Hier handelt es sich bei den Klappen-Bedienereignissen um das Drücken des jeweiligen elektrischen Tasters. Jedes dieser Klappen-Bedienereignisse führt zu einer oben beschriebenen steuerungstechnischen Reaktion der Steuerungsanordnung 3.

Es ist zu erwarten, dass die vorschlagsgemäße Lösung vor allem relevant ist im Hinblick auf die Vermeidung einer ungewünschten Doppelbetätigung ein und desselben Betätigungselements 5a-d. Entsprechend besteht eine Unterdrückungsbedingung vorzugsweise darin, dass es sich bei den obigen, aufeinander folgenden Klappen-Bedienereignissen um im Wesentlichen identische Klappen-Bedienereignisse handelt. Der Benutzer nimmt also ein und dasselbe Klappen-Bedienereignis versehentlich doppelt vor.

Den identischen Klappen-Bedienereignissen ist vorzugsweise ein Betätigungselement 5a zugeordnet. Hier und vorzugsweise handelt es sich bei diesem Betätigungselement 5a um das außen am Klappenflügel 2 angeordnete Betätigungselement 5a.

Meist besteht das Risiko einer ungewünschten Doppelbetätigung nur zu Beginn eines Verstellvorgangs, insbesondere zu Beginn des Öffnungsvorgangs. Entsprechend besteht eine Unterdrückungsbedingung vorzugsweise darin, dass die aufeinander folgenden Klappen-Bedienereignisse innerhalb eines vorbestimmten, zeitlichen Grenzintervalls aufeinander folgen. Dieses zeitliche Grenzintervall ist vorzugsweise kleiner als 3s, weiter vorzugsweise kleiner als 1s und insbesondere kleiner als 0,5s. Die Auslegung hängt hier wesentlich von den konstruktiven Gegebenheiten ab.

Denkbar ist entsprechend auch, dass das Unterdrücken der betreffenden Reaktion nur in einem vorbestimmten Verstellbereich des Klappenflügels 2 vorgenommen wird. Im Einzelnen besteht eine Unterdrückungsbedingung vorzugsweise darin, dass sich der Klappenflügel 2 in einem vorbestimmten Verstellbereich befindet, bei dem es sich insbesondere um einen der Schließstellung vorgelagerten Grenz-Verstellbereich befindet. Dieser Verstellbereich kann beispielsweise durch einen Verstellweg des Klappenflügels 2, hier und vorzugsweise durch einen vorbestimmten Klappenwinkel oder durch eine vorbestimmte Verstellzeit definiert sein. Denkbar ist aber auch, dass der Verstellbereich durch einen Verstellweg des Klappenantriebs 4 definiert ist, beispielsweise durch den Verstellweg einer Antriebs- oder Getriebewelle des Klappenantriebs 4. Die Abfrage der Verstellung einer solchen Welle kann beispielsweise durch einen inkrementellen Hall-Sensor oder dgl. erfolgen.

Grundsätzlich ist es aber auch denkbar, dass der Grenz-Verstellbereich durch einen Verstellanteil bezogen auf den jeweiligen Gesamt-Verstellweg definiert ist. Beispielsweise kann der Grenz-Verstellbereich durch einen prozentualen Anteil an einem Gesamt-Verstellweg des Klappenflügels 2 oder irgendeines anderen Elements in dem betreffenden Antriebsstrang definiert sein.

Wie im einleitenden Teil der Beschreibung erläutert, geht es in erster Linie darum, eine ungewünschte Doppelbetätigung beim Starten des Öffnungsvorgangs zu vermeiden. Entsprechend besteht eine Unterdrückungsbedingung vorzugsweise darin, dass das erste Klappen-Bedienereignis der beiden aufeinanderfolgenden Klappen-Bedienereignisse das Starten eines Öffnungsvorgangs auslöst.

Nach einer weiteren Lehre, der ebenfalls eigenständige Bedeutung zukommt, wird die obige Klappenanordnung 1 eines Kraftfahrzeugs als solche beansprucht. Der grundsätzliche Aufbau der Klappenanordnung ergibt sich aus den Erläuterungen zu dem vorschlagsgemäßen Verfahren, so dass auf die dortigen Ausführungen verwiesen werden darf. Wesentlich ist dabei, dass die Klappenanordnung 1 der Durchführung des obigen, vorschlagsgemäßen Verfahrens dient.

In einer besonders bevorzugten Ausgestaltung ist die Klappenanordnung 1 mit einem Kraftfahrzeugschloss 8 ausgestattet, das in einem Rastzustand in haltendem Eingriff mit einem Schließkeil 9 oder dgl. steht und in einem Freigabezustand den Schließkeil 9 oder dgl. freigibt. Das Kraftfahrzeugschloss 8 wird mittels der Steuerungsanordnung 3 in den Freigabezustand gesteuert, bevor ein motorischer Öffnungsvorgang gestartet wird. Bei in der Schließstellung befindlichem Klappenflügel 2 befindet sich das Kraftfahrzeugschloss 8 entsprechend im Rastzustand, der beim Starten des Öffnungsvorgangs, wie oben erläutert, aufgehoben werden muss.

Der Öffnungsvorgang führt regelmäßig zu einem kurzzeitigen Aufspringen des Klappenflügels 2, wie im einleitenden Teil der Beschreibung erläutert wurde. Durch die vorschlagsgemäße Lösung lässt sich ohne weiteres vermeiden, dass mit dem Aufspringen des Klappenflügels 2 eine ungewünschte Doppelbetätigung des außen am Klappenflügel 2 angeordneten Betätigungselements 5a einhergeht.

## Patentansprüche

1. Verfahren für den Betrieb einer Klappenanordnung (1) eines Kraftfahrzeugs, wobei die Klappenanordnung (1) einen Klappenflügel (2) und eine Steuerungsanordnung (3) aufweist, wobei ein dem Klappenflügel (2) zugeordneter Klappenantrieb (4) vorgesehen ist, durch den der Klappenflügel (2) zwischen einer Schließstellung und einer Öffnungsstellung in einem Verstellvorgang verstellbar ist, wobei mittels der Steuerungsanordnung (3) mindestens ein vorbestimmtes Klappen-Bedienereignis erfasst und als steuerungstechnische Reaktion auf ein Klappen-Bedienereignis der Klappenantrieb (4) angesteuert wird und wobei mittels der Steuerungsanordnung (3) als steuerungstechnische Reaktion auf ein Klappen-Bedienereignis aus einem Stillstand heraus ein neuer Verstellvorgang gestartet oder ein gestoppter Verstellvorgang ggf. in umgekehrter Verstellrichtung fortgesetzt wird und aus einem Verstellvorgang heraus der Verstellvorgang gestoppt wird,
**dadurch gekennzeichnet,**
**dass** bei zwei aufeinanderfolgenden Klappen-Bedienereignissen mittels der Steuerungsanordnung (3) die auf das zweite Klappen-Bedienereignis zurückgehende, steuerungstechnische Reaktion des Stoppens eines Verstellvorgangs unterdrückt wird, sofern mindestens eine Unterdrückungsbedingung erfaßt wird.

2. Verfahren nach Anspruch 1, **dadurch gekennzeichnet, dass** mindestens zwei Unterdrückungsbedingungen definiert sind, die für das Unterdrücken einer steuerungstechnischen Reaktion nach Art einer UND-Verknüpfung erfüllt sein müssen.

3. Verfahren nach Anspruch 1 oder 2, **dadurch gekennzeichnet, dass** einem Klappen-Bedienereignis ein Betätigungselement (5) zugeordnet ist, dessen Betätigung dem jeweiligen Klappen-Bedienereignis entspricht.

4. Verfahren nach einem der vorhergehenden Ansprüche, **dadurch gekennzeichnet, dass** mindestens ein einem Klappen-Bedienereignis zugeordnetes Betätigungselement (5a,b) an dem Klappenflügel (2) angeordnet ist, und/oder, dass ein einem Klappen-Bedienereignis zugeordnetes Betätigungselement (5c) im Fahrzeuginnenraum angeordnet ist, und/oder, dass ein einem Klappen-Bedienereignis zugeordnetes Betätigungselement (5d) an einem Funkschlüssel (7) o. dgl. angeordnet ist.

5. Verfahren nach einem der vorhergehenden Ansprüche, **dadurch gekennzeichnet, dass** eine Unterdrückungsbedingung darin besteht, dass es sich bei den aufeinanderfolgenden Klappen-Bedienereignissen um im Wesentlichen identische Klappen-Bedienereignisse handelt, vorzugsweise dass den identischen Klappen-Bedienereignissen ein Betätigungselement (5), vorzugsweise ein an dem Klappenflügel (2) angeordnetes Betätigungselement (5), weiter vorzugsweise ein außen an dem Klappenflügel (2) angeordnetes Betätigungselement (5) zugeordnet ist.

6. Verfahren nach einem der vorhergehenden Ansprüche, **dadurch gekennzeichnet, dass** eine Unterdrückungsbedingung darin besteht, dass die aufeinanderfolgenden Klappen-Bedienereignisse innerhalb eines vorbestimmten, zeitlichen Grenzintervalls aufeinanderfolgen, vorzugsweise, dass das zeitliche Grenzintervall kleiner als 3s, vorzugsweise kleiner als 1s, weiter vorzugsweise kleiner als 0,5s ist.

7. Verfahren nach einem der vorhergehenden Ansprüche, **dadurch gekennzeichnet, dass** eine Unterdrückungsbedingung darin besteht, dass sich der Klappenflügel (2) in einem vorbestimmten Verstellbereich befindet, vorzugsweise, dass sich der Klappenflügel (2) in einem vorbestimmten, der Schließstellung vorgelagerten Grenz-Verstellbereich befindet, vorzugsweise, dass der Grenz-Verstellbereich durch einen Verstellweg des Klappenflügels (2), insbesondere einen Klappenwinkel, durch einen Verstellweg des Klappenantriebs (4) oder durch einen Verstellanteil bezogen auf den jeweiligen Gesamt-Verstellweg definiert ist.

8. Verfahren nach einem der vorhergehenden Ansprüche, **dadurch gekennzeichnet, dass** eine Unterdrückungsbedingung darin besteht, dass das erste Klappen-Bedienereignis der aufeinanderfolgenden Klappen-Bedienereignisse das Starten eines Öffnungsvorgangs auslöst.

9. Klappenanordnung (1) eines Kraftfahrzeugs, wobei ein Klappenflügel (2) und eine Steuerungsanordnung (3) vorgesehen sind, wobei ein dem Klappenflügel (2) zugeordneter Klappenantrieb (4) vorgesehen ist, durch den der Klappenflügel (2) zwischen einer Schließstellung und einer Öffnungsstellung in einem Verstellvorgang verstellbar ist und wobei die Steuerungsanordnung (3) als steuerungstechnische Reaktion auf ein Klappen-Bedienereignis aus einem Stillstand heraus einen neuen Verstellvorgang startet oder einen gestoppten Verstellvorgang ggf. in umgekehrter Verstellrichtung fortsetzt und aus einem Verstellvorgang heraus den Verstellvorgang stoppt,
**dadurch gekennzeichnet,**
**dass** die Steuerungsanordnung (3) die auf zwei aufeinanderfolgende Klappen-Bedienereignisse zurückgehende, steuerungstechnische Reaktion des Stoppens eines Verstellvorgangs unterdrückt, sofern sie mindestens eine Unterdrückungsbedingung erfaßt.

10. Klappenanordnung nach Anspruch 9, **dadurch gekennzeichnet, dass** die Klappenanordnung (1) ein Kraftfahrzeugschloss (8) aufweist, das in einem Rastzustand in haltendem Eingriff mit einem Schließkeil (9) o. dgl. steht und in einem Freigabezustand den Schließkeil (9) o. dgl. freigibt und dass das Kraftfahrzeugschloss (8) mittels der Steuerungsanordnung (3) in den Freigabezustand gesteuert wird, bevor ein motorischer Öffnungsvorgang gestartet wird.

## Claims

1. Method for operating a flap arrangement (1) of a motor vehicle, wherein the flap arrangement (1) has a flap wing (2) and a control arrangement (3), wherein a flap drive (4) which is assigned to the flap wing (2) and by which the flap wing (2) can be adjusted between a closed position and an open position in an adjustment process is provided, wherein at least one predetermined flap operator control event is detected by means of the control arrangement (3) and the flap drive (4) is actuated as a technical control reaction to a flap operator control event, and wherein, by means of the control arrangement (3), a new adjustment process is started from a stationary state as a technical control reaction to a flap operator control event or a stopped adjustment process is, under certain circumstances, continued in the opposite adjustment direction and the adjustment process is stopped from an adjustment process,
**characterized**
**in that** in the case of two successive flap operator control events the technical control reaction of stopping an adjustment process, which is due to the second flap operator control event, is suppressed by means of the control arrangement (3) if at least one suppression condition is detected.

2. Method according to Claim 1, **characterized in that** at least two suppression conditions are defined which have to be met for the suppression of a technical control reaction in the manner of an AND logic operation.

3. Method according to Claim 1 or 2, **characterized in that** a flap operator control event is assigned an activation element (5), the activation of which corresponds to the respective flap operator control event.

4. Method according to one of the preceding clams, **characterized in that** at least one activation element (5a, b) which is assigned to a flap operator control event is arranged on the flap wing (2), and/or **in that** an activation element (5c) which is assigned to a flap operator control event is arranged in the passenger compartment of the vehicle, and/or **in that** an activation element (5d) which is assigned to a flap operator control event is arranged on a radio key (7) or the like.

5. Method according to one of the preceding claims, **characterized in that** a suppression condition is that the successive flap operator control events are substantially identical flap operator control events, preferably that the identical flap operator control events are assigned an activation element (5), preferably an activation element (5) arranged on the flap wing (2), further preferably an activation element (5) arranged on the outside of the flap wing (2).

6. Method according to one of the preceding claims, **characterized in that** a suppression condition is that the successive flap operator control events are successive within a predetermined limiting time interval, preferably that the limiting time interval is less than 3s, preferably less than 1s, further preferably less than 0.5s.

7. Method according to one of the preceding claims, **characterized in that** a suppression condition is that the flap wing (2) is in a predetermined adjustment range, preferably that the flap wing (2) is in a predetermined limiting adjustment range positioned before the closed position, preferably that the limiting adjustment range is defined by an adjustment travel of the flap wing (2), in particular a flap angle, by an adjustment travel of the flap drive (4) or by an adjustment portion in relation to the respective overall adjustment travel.

8. Method according to one of the preceding claims, **characterized in that** a suppression condition is that the first flap operator control event of the successive flap operator control events triggers the starting of an opening process.

9. Flap arrangement (1) of a motor vehicle, wherein a flap wing (2) and a control arrangement (3) are provided, wherein a flap drive (4) which is assigned to the flap wing (2) and by which the flap wing (2) can be adjusted between a closed position and an open position in an adjustment process is provided, and wherein the control arrangement (3) starts, as a technical control reaction to a flap operator control event, a new adjustment process from a stationary state or, under certain circumstances, continues a stopped adjustment process in the opposite adjustment direction, and stops the adjustment process from an adjustment process,
**characterized**
**in that** the control arrangement (3) suppresses the technical control reaction of the stopping of an adjustment process, which is due to two successive flap operator control events, if the control arrangement (3) detects at least one suppression condition.

10. Flap arrangement according to Claim 9, **characterized in that** the flap arrangement (1) has a motor vehicle lock (8) which in a latched state engages in a securing fashion with a closing wedge (9) or the like, and in a released state releases the closing wedge (9) or the like, and **in that** the motor vehicle lock (8) is adjusted to the released state by means of the control arrangement (3) before a motor-operated opening process is started.

## Revendications

1. Procédé d'utilisation d'un agencement de rabattement (1) d'un véhicule automobile, l'agencement de rabattement (1) comportant un ouvrant de rabattement (2) et un dispositif de commande (3), un entraînement de rabattement (4) associé à l'ouvrant de rabattement (2) étant prévu à travers lequel l'ouvrant de rabattement (2) peut être déplacé entre une position de fermeture et une position d'ouverture lors d'un processus de déplacement, au moins un événement de commande de rabattement prédéfini étant détecté à l'aide du dispositif de commande (3) et l'entraînement de rabattement (4) étant commandé comme réaction de technique de commande en présence d'un événement de commande de rabattement et un nouveau processus de déplacement étant démarré à l'aide du dispositif de commande (3) comme réaction de technique de commande en présence d'un événement de commande de rabattement en partant d'un arrêt ou un processus de déplacement arrêté étant le cas échéant poursuivi dans la direction inverse de déplacement et le processus de déplacement étant arrêté en partant d'un processus de déplacement ;
**caractérisé en ce que** :
en présence de deux événements de commande de rabattement successifs à l'aide du dispositif de commande (3), la réaction de technique de commande d'arrêt d'un processus de déplacement dérivant du deuxième événement de commande de rabattement est interrompue dans la mesure où au moins une condition de suppression est détectée.

2. Procédé selon la revendication 1, **caractérisé en ce qu'**au moins deux conditions de suppression sont définies, lesdites conditions devant être remplies pour la suppression d'une réaction de technique de commande à la façon d'une opération logique ET.

3. Procédé selon la revendication 1 ou 2, **caractérisé en ce qu'**un élément d'actionnement (5) est associé à un événement de commande de rabattement, l'actionnement dudit élément correspondant à l'événement de commande de rabattement respectif.

4. Procédé selon l'une quelconque des revendications précédentes, **caractérisé en ce qu'**au moins un élément d'actionnement (5a, b) associé à un événement de commande de rabattement est disposé au niveau de l'ouvrant de rabattement (2) et/ou qu'un élément d'actionnement (5c) associé à un événement de commande de rabattement est disposé dans l'habitacle de véhicule et/ou qu'un élément d'actionnement (5d) associé à un événement de commande de rabattement est disposé au niveau d'une serrure à point (7) ou son équivalent.

5. Procédé selon l'une quelconque des revendications précédentes, **caractérisé en ce qu'**une condition de suppression consiste **en ce que** les événements de commande de rabattement successifs prennent pour l'essentiel la forme d'événements de commande de rabattement identiques, de préférence qu'un élément d'actionnement (5), de préférence un élément d'actionnement (5) disposé au niveau de l'ouvrant de rabattement (2), de façon davantage préférée un élément d'actionnement (5) extérieur disposé au niveau de l'ouvrant de rabattement (2), soit associé aux événements de commande de rabattement identiques.

6. Procédé selon l'une quelconque des revendications précédentes, **caractérisé en ce qu'**une condition de suppression consiste **en ce que** des événements de commande de rabattement successifs se suivent à l'intérieur d'un intervalle limite dans le temps prédéfini, de préférence que l'intervalle limite dans le temps soit inférieur à 3 s, de préférence inférieur à 1 s, de façon davantage préférée inférieur à 0,5 s.

7. Procédé selon l'une quelconque des revendications précédentes, **caractérisé en ce qu'**une condition de suppression consiste **en ce que** l'ouvrant de rabattement (2) se trouve dans une zone de déplacement prédéfinie, de préférence que l'ouvrant de rabattement (2) se trouve dans une zone de déplacement limite prédéfinie disposée en amont de la position de fermeture, de préférence que la zone de déplacement limite soit définie par une course de déplacement de l'ouvrant de rabattement (2), notamment un angle de rabattement traversant une course de déplacement de l'entraînement de rabattement (4) ou une quotité de déplacement par rapport à la course de déplacement totale respective.

8. Procédé selon l'une quelconque des revendications précédentes, **caractérisé en ce qu'**une condition de suppression consiste **en ce que** le premier événement de commande de rabattement des événements de commande de rabattement successifs déclenche le démarrage d'un processus d'ouverture.

9. Agencement de rabattement (1) d'un véhicule automobile, un ouvrant de rabattement (2) et un dispositif de commande (3) étant prévus, un entraînement de rabattement (4) associé à l'ouvrant de rabattement (2) étant prévu à travers lequel l'ouvrant de rabattement (2) peut être déplacé entre une position de fermeture et une position d'ouverture lors d'un processus de déplacement et le dispositif de commande (3) démarrant, comme réaction de technique de commande en présence d'un événement de commande de rabattement, en partant d'un arrêt, un processus de déplacement ou poursuivant un processus de déplacement arrêté le cas échéant dans la direction inverse de déplacement et arrêtant le processus de déplacement en partant d'un processus de déplacement ;
**caractérisé en ce que** :
le dispositif de commande (3) supprime la réaction de technique de commande d'arrêt d'un processus de déplacement dérivée de deux événements de commande de rabattement successifs dès lors qu'elle détecte au moins une condition de suppression.

10. Agencement de rabattement selon la revendication 9, **caractérisé en ce que** l'agencement de rabattement (1) comporte une serrure de véhicule automobile (8) se trouvant dans un état enclenché en prise d'adhérence avec une clavette de fermeture (9) ou son équivalent et libère dans un état de libération la clavette de fermeture (9) ou son équivalent et que la serrure de véhicule automobile (8) est commandée dans l'état de libération à l'aide du dispositif de commande (3), avant de démarrer un processus d'ouverture motorisé.
